# EUROPEAN PATENT SPECIFICATION

(11) **EP 1 217 555 B1**
(45) Date of publication and mention of the grant of the patent: **11.04.2007**
(21) Application number: 01310565.5
(22) Date of filing: 18.12.2001
(51) Int. Cl.: G06F 17/30

(54) **System and method for browsing node-link structures based on an estimated degree of interest**
System und Methode zum Durchstöbern von knotenverbundenen Strukturen basierend auf einem geschätzten Interessegrad
Système et procédé de navigation des structures de noeud-lien basés sur une estimation du degré de l'intérêt

(30) Priority: 21.12.2000 US 747634; 21.12.2000 US 748027
(43) Date of publication of application: 26.06.2002
(73) Proprietor: Xerox Corporation, Rochester, New York 14644 (US)
(72) Inventor: Card, Stuart K., Los Altos Hills, CA 94022 (US); Nation, David A., Hanover, MD 21076-1646 (US)
(74) Representative: Skone James, Robert Edmund

(56) References cited:
- US-A- 6 057 843
- TURO D ET AL: "Improving the visualization of hierarchies with treemaps: design issues and experimentation" PROCEEDINGS. VISUALIZATION '92 (CAT. NO.92CH3201-1), BOSTON, MA, USA, 19-23 OCT. 1992, pages 124-131, XP002228633 1992, Los Alamitos, CA, USA, IEEE Comput. Soc. Press, USA ISBN: 0-8186-2897-9
- NOIK E G: "Exploring large hyperdocuments: fisheye views of nested networks" PROCEEDINGS CASCON '93, PROCEEDINGS OF CASCON '93, TORONTO, ONT., CANADA, 24-28 OCT. 1993, pages 661-676 vol.2, XP008012935 1993, Ottawa, Ont., Canada, Nat. Res. Council of Canada, Canada
- SARKAR M ET AL: "GRAPHICAL FISHEYE VIEWS OF GRAPHS" STRIKING A BALANCE. MONTEREY, MAY 3 - 7, 1992, PROCEEDINGS OF THE CONFERENCE ON HUMAN FACTORS IN COMPUTING SYSTEMS, READING, ADDISON WESLEY, US, 3 May 1992 (1992-05-03), pages 83-91, XP000426810
- HERMAN I ET AL: "Latour-a tree visualisation system" GRAPH DRAWING. 7TH INTERNATIONAL SYMPOSIUM, GD'99. PROCEEDINGS (LECTURE NOTES IN COMPUTER SCIENCE VOL.1731), PROCEEDINGS OF CONFERENCE ON GRAPH DRAWING, STIRIN CASTLE, CZECH REPUBLIC, 15-19 SEPT. 1999, pages 392-399, XP002228747 1999, Berlin, Germany, Springer-Verlag, Germany ISBN: 3-540-66904-3
- FURNAS G.W.: 'Generalized Fisheye Views' CHI '86 CONFERENCE PROCEEDINGS 01 April 1986, NEW JERSEY, pages 16 - 23, XP000569929

## Description

The present invention relates to the field of information visualization and in particular to the display of representations of linked information based on user interest.

Many applications of computers to practical problems involve the display of representations of linked information such as hierarchical data. Linked information refers to information that has some logical or organizational relationship. Examples are organization charts, computer programs, Web sites, filing systems, or biological taxonomies. These data structures are often much larger than will conveniently fit on the screen of a computer display monitor so that information can be easily extracted. But finding a way of presenting these structures to users such that (1) they can find elements in the structure quickly and (2) they can understand the relationship of an element to its surrounding context is an important enabler to many uses of such data.

One example is in the area of linked hierarchical data. Linked hierarchical data is often displayed in a tree structure. Several types of methods have been used to display such tree structures: including uniform or scaled layout of trees, treemaps, fish-eye views, focus plus context views and hyperbolic trees.

Some examples of display methods and techniques are provided in "Improving the visualization of hierarchies with treemaps: design issues and experimentation", D. Turo et al (Proceedings Visualization 1992, p. 124-131, 19-23 Oct 1992, XP00222B633). In particular algorithms for partitioning a display space are disclosed which rely on each node having a predetermined "weight", determined according to the information being displayed. This technique however suffers from low-weight nodes becoming illegible as the display is increasingly partitioned.

"Graphical fisheye views of graphs", M. Sarkar et al CHI'92, 3-7 May 1992, XP000426810), describes a distorting fisheye view technique which determines the "visual worth" of a node based on its geometric distance from a selected node in the normal (undistorted) view. This approach is only effective where the abstract distance between nodes corresponds to their proximity in the drawing. Where this is not the case, substantial anomalies occur in the fisheye view.

"Exploring large hyperdocuments: fisheye views of nested networks", E.G. Noik, (Proceedings cascon 1993, p. 661-676, vol. 2, XP002228634), describes a technique for generating fisheye views of nested structures without filtering or distortion. The size of each node is changed to reflect its degree of interest (DOI) before it is positioned. Since this technique does not alter an existing layout, the document does not discuss problems which may be encountered in fitting the visualisation into the display area.

Despite such methods and techniques there remains a need to effectively display and extract useful information from large bodies of linked data.

The present invention provides for user browsing of large collections of linked information on a computer-based display. A visualization is created which presents a representation of the complete collection of information on the display. The visualization fits completely within a fixed area of the computer-based display, negating the need to scroll information into or out of the display area. The visualization is based on identified focus nodes and through calculation of a Degree of Interest (DOI) for each of the nodes in the structure. Layout and presentation of the visualization structure is based on the DOI values in combination with considerations of available display space. A user may dynamically manipulate views of the structure by selecting one or more focus nodes, thus causing a recalculation of the degree of interest.

In accordance with the present invention, a method for displaying a representation of an entire collection of linked information using a visualization technique in a display area, said linked information comprised of a plurality of nodes each having one or more links to other of said plurality of nodes, said method comprising the steps of:
a) identifying one or more focus nodes from said plurality of nodes;
b) generating a degree of interest (DOI) value for each of said plurality of nodes, said degree of interest value based on at least a distance between each node and said one or more focus nodes and corresponding to a node display size, and comprising the steps of
   b1) assigning a highest DOI value to said one or more focus nodes and their parent node(s) up to a root of the linked information;
   b2) for each sibling of the focus nodes assigning a DOI value less than the highest DOI value and based upon an order of the sibling node; and
   b3) for all remaining nodes, assigning a DOI value less than that of their parent node;
c) laying out said plurality of nodes positioned based on associated links and sized based on associated degree of interest values in a tree structure;
d) identifying and performing any compression of the node display sizes necessary for displaying said linked information based on the layout of said plurality of nodes so that said representation is displayed completely in said display area; and,
e) displaying said linked information based on said layout of plurality of nodes and node compression in the display area, and wherein generating the DOI values further comprises, after step b2 and before step b3, identifying the most interesting child node(s) of the focus node up to a user-defined number of levels below the focus node and assigning to the siblings of the identified nodes, DOI values which are lower than those of the identified nodes and based on an order of the sibling node.

The invention further provides a system for browsing a collection of linked data item, said system comprising:
a display means having a display area for presenting views of a visualization of said collection of linked data items; and
an input device for providing input to change view of said visualization of said collection of linked data items;
characterised by
a visualization processing element coupled to said display means and said input device, said element adapted to create a visualization of said collection of linked data items based on a Degree of Interest and a size of said display area, in accordance with the above-described method.

The present invention may be used to display information units comprised of data items that are static, dynamic or a combination of both static and dynamic. An example of information units having static data items would be the nodes in an organization chart. An example of an information unit having dynamic data would be the representation of a web site wherein an information unit represents a web page within the site and includes a dynamic data item representing the number of "hits" that corresponding page is encountering over some period of time.

Some examples of methods and systems according to the present invention will now be described with reference to the accompanying drawings, in which:-
Figure 1 is a flowchart of the basic steps for creating a visualization of a linked structure;
Figure 2 is an illustration of a DOI tree of uniform structure having the root node as the focus node;
Figure 3 is an illustration of the DOI tree of Figure 2 with the focus node moved to a second level node;
Figure 4 is an illustration of the DOI tree of Figure 2 with the focus moved to a leaf node so that it becomes the new focus node;
Figure 5 is an illustration of a DOI tree showing various tree compression techniques;
Figure 6 is an illustration of various predetermined areas in a display area, as may be utilized to display a DOI tree;
Figures 7 and 8 are illustrations of the DOI tree of Figure 2 with and without using the Expand to Fit techniques of the present invention;
Figure 9 is an illustration of a large organization chart;
Figure 10 is an illustration of a representation of a large database with a leaf node being located as the subject of a search and thus being displayed as a focus node;
Figure 11 is an illustration of a tree derived from a database with multiple links per node, wherein one node is used to generate the tree structure and other links become visible upon some user action;
Figure 12 is an illustration of a biblioplex showing multiple generations of linkages from a main document;
Figure 13 is an illustration of a control panel for controlling the DOI tree visualization of the currently preferred embodiment of the present invention;
Figure 14 is a block diagram illustrating the functional software implemented components and data flow as may be used to implement the currently preferred embodiment of the present invention; and,
Figure 15 is a block diagram of a computer-based system as may be utilized to implement the currently preferred embodiment of the present invention.

The present invention provides an information visualization technique that enables a user to effectively browse through large collections of linked data. When utilizing the present invention a user is able to dynamically manipulate views of large amounts of displayed data so that the information presented is effectively perceived by the viewer. The present invention may be used to display information units comprised of data items that are static, dynamic or a combination of both static and dynamic. An example of information units having static data items would be the nodes in an organization chart. An example of an information unit having dynamic data would be the representation of a web site wherein an information unit represents a web page within the site and includes a dynamic data item representing the number of "hits" that corresponding page is encountering over some period of time.

The present invention operates on linked information, which can often be represented as a node-link structure. In a node-link representation, each node represents an information unit and the link represents a relationship amongst the different nodes. The underlying data may have some actual linkage (e.g. web pages or other documents containing hypertext links) or some logical linkage (e.g. the nodes comprising an organization chart).

The present invention has been implemented for operation on computer based systems having a graphical user interface such as those utilizing the Windows^{®} Operating System form Microsoft, Inc. or the Mac OS operating System from Apple Computer, Inc. Such graphical user interfaces have the characteristic that a user may interact with the computer system using a cursor control device and/or via a touch-screen display, rather than solely via keyboard input device. Such systems also have the characteristic that they may have multiple "windows" wherein discrete operating functions or applications may occur. A more complete description of such a computer-based system upon which the present invention may be implemented is provided below.

The present invention combines (a) the idea of computing Degree Of Interest (DOI) estimates of users' interest with (b) focus + context techniques for dynamically changing the view as the DOI changes and (c) adjustment of what is displayed based on available display resource (e.g. the viewable area of a computer display, or the size of a "window" on the display).

The present invention can be thought of as being modular so that the display of information to the user is computed in two parts: (1) an estimation of users' degree-of-interest in each of the nodes and (2) a visualization of the data based on the computed users' interest and the amount of available display resource. A visualization using the present invention may be used to present various visualizations of linked information such as tree structures or collections of hyper-linked documents. The present invention further uses animation to provide for smooth visual transitions to indicate changes of DOI in the displayed structure.

### (1) Estimate of users' degree-of-interest in nodes

The Degree of Interest (DOI) refers to a value attributed to a particular node with respect to some focus node. The DOI value provides a way of placing a quantitative value on the nodes. The DOI value may be calculated in many different ways, and is often directly related to the manner in which the data to be visualized is captured. For example, real time usage data may be used to calculate a DOI so the DOI value could be based on the usage.

In the prior art, the DOI of a node in a tree structure is estimated as the Intrinsic Importance plus the Distance from a focus node. The Intrinsic Importance represents the relevancy or importance of a node with respect to a root node and is measured as the number of nodes from the root node to the subject node. The Distance of a node from the focus node is the number of nodes that must be traversed by following parent and child links from the node of interest until reaching the subject node.

In the present invention, the degree of interest calculation for a tree structure is different from that disclosed in the prior art. In the prior art, all siblings' nodes that are the same distance from the focus node have the same DOI value. The calculation of the present invention treats the children of a parent node as ordered and assigns fractional DOI offsets to the children based on order distance from the focus node. The farther the sibling is from the focus node based on the ordering, the more the fractional decrement in its DOI (but the decrement is always less than 1). Further, the DOI of the children of the siblings is based on the siblings DOI. This allows the visualization element to decide which sibling nodes to compress and how to compress them.

### (2) Visualization

As noted above, various visualization techniques may be used when implementing the present invention. Initially, each DOI value corresponds to a node size parameter. Typically, this node size parameter may correspond to a largest node size for a particular range of DOI values. Upon generation of the structure in the visualization, the nodes are laid out using the node size parameter along with any structure-based adjustments. These structure-based adjustments facilitate optimal use of the display area in terms of presenting information, as well as providing a smoother visual appearance of the structure. Further visualization compressions of the nodes in the structure may be made based on the available display area. For example, portions of the structure lying in predetermined areas may be aggregated, or certain portions of the structure may be collectively represented by a symbol as a result of their lower DOI values (wherein the size of the symbol may represent the number of nodes being represented). Alternatively, a displayed structure may not completely utilize a display resource, in which case visualization expansions will occur to more effectively utilize the available display resource.

The currently preferred embodiment of the present invention is implemented to display hierarchically linked data in a tree structure. This is hereinafter referred to as a Degree of Interest (DOI) Tree. The DOI tree can be used to display various types of hierarchical information such as organization charts, file structures, or representations of web sites.

The following terminology is used to describe a tree structure. A root node refers to the topmost node in the structure and the one in which the rest of the tree structure emanates from. A tree structure will have multiple levels, each level representing a horizontal portion of the structure. The nodes in the tree structure will be connected via links. Nodes will have relationships with other nodes, which are termed parent, child or sibling. A node is a parent node to another node if it is directly linked and is one level above the other node. Similarly, a node is a child node if it is directly linked and is one level below the other node. Sibling nodes are those that lie on the same level and which have the same parent node.

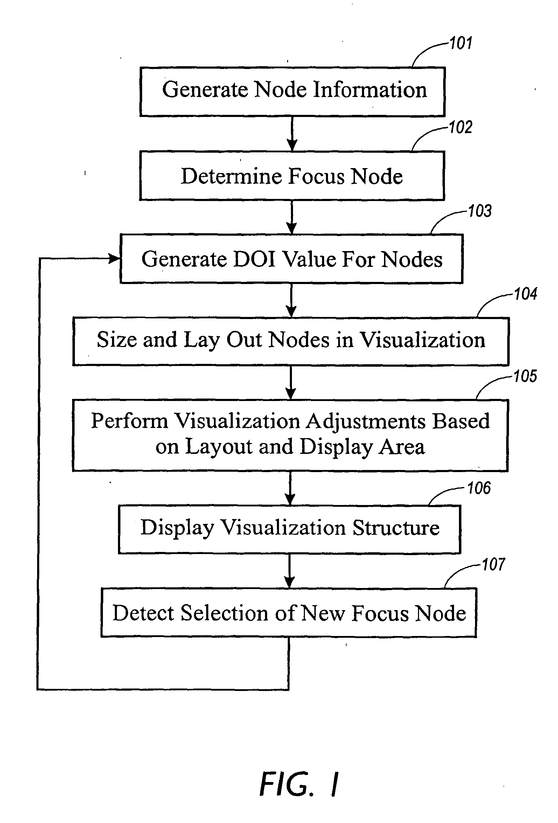

Figure 1 is a flowchart that describes the general method of the present invention. First, node information is generated for nodes in the visualization, step 101. This node information is generated using stored data for the nodes. A focus node is then determined, step 102. Upon the first display of the visualization, the focus node may be the "root" node, or it could be based on how display of the structure was requested. During browsing of the structure, the focus node would typically be identified by user selection of a particular node. The DOI for the nodes are then generated, step 103. As described above, the DOI is determined not only by the distance from the focus node, but also based on it's (or it's parent's) order with respect to the focus node. The nodes are then sized and laid out based on their DOI value, step 104. A manner in which nodes are sized is provided below with respect to pseudo code provided in Table 1. The manner in laying out the nodes is based on the visualization structure (e.g. a tree or some other structure). Visualization adjustments are then made to optimize use of the display area, step 105. As noted above, these visualization adjustments may be visualization compressions or visualization expansions. The visualization structure is displayed, step 106. When a new focus node is selected and detected, step 107, the steps repeat starting at step 103 with the new visualization structure preferably being displayed using animation techniques.

Table 1 provides pseudo-code that describes the manner of processing nodes in the currently preferred embodiment.

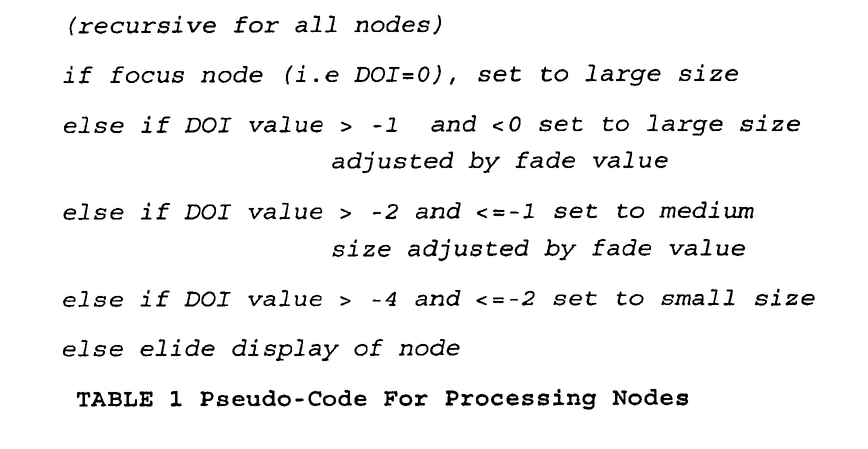

Referring to Table 1, the listed operations are repeated recursively for each node. Generally, the focus node will have the largest possible size, with smaller sizes being assigned based on the DOI value. The numerical values presented in Table 1 are for illustration and are actually parametric thresholds that could vary. Note that the node sizes are assigned based on DOI values falling within a particular range. Use of other values or parametric thresholds would not cause departure from the spirit and scope of the present invention. The option of a fade value is a technique for making small distinctions among nodes that would otherwise be the same size. The fade value is a fractional value used to decrease the size of nodes as they get further away from the focus node. For examples for a hierarchical structure a fade value of .10 would decrease the size of the row of nodes above and below the focus row by 10%. The next row above and below that rose would be 20% smaller. This permits more space for the focus node for large trees with many levels.

It should also be noted from Table 1 that if a DOI value falls below some particular threshold, here <-4, then the node will be elided (i.e. not displayed).

The basic calculation of the Degree of Interest (DOI) for nodes in using the standard layout follows the following rules:
1. The Focus nodes and parent nodes up to the root node are assigned a DOI value of 0.
2. Assign a DOI value of -1 plus offset to sibling nodes of nodes having a DOI value of 0.
3. For the rest of the nodes, assign a DOI value of one less than their parent node.

The standard layout is one where there is a single focus node. In an alternative scheme where there may be multiple focus nodes (e.g. nodes found as a result of some search) the rules for assigning the DOI would be as follows:
1. Assign a DOI value of -1 to all selected nodes;
2. Assign a DOI value of -1 to parents of selected nodes up to root node.
3. For the rest of the nodes, assign a DOI value of one less than their parent node.

With respect to the offset described above, the DOI calculation of the present invention treats the children of a parent node as ordered and assigns fractional DOI offsets to the children based on order distance from the focus node. The farther the sibling is from the focus node based on the ordering, the more the fractional decrement in its DOI (but the decrement is always less than 1).

For the visualization of the DOI tree, there are a small number of possible node sizes for presenting the information associated with the node. For most tree structures, it has been determined that three is a reasonable number of nodes sizes, but five or some other number of node sizes could equally well be used. As described above with respect to the general concepts, the particular node size used depends on the DOI of the node. A table may be used to map DOI values into node sizes during the creation of the visualization. The table may contain actual node sizes, or sizing factors for use in drawing each of the nodes.

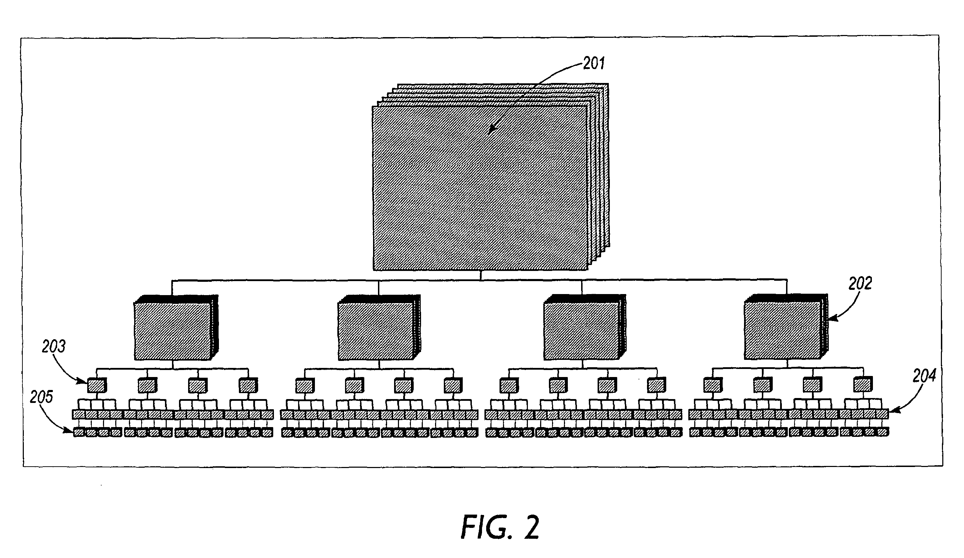

Figure 2 shows the display of a uniform tree of 4 levels, with 4 branches at each level and the focus on root node 201. The root node 201 has been selected for the focus node and automatically has a larger size. To further indicate that it is a focus node, it may be displayed so that it is more visually distinct, e.g. in a different color than the other nodes. Smaller node sizes have been automatically selected for nodes with lower DOI. For example, nodes at level 202, level 203 and level 204 are represented as consecutively smaller. It should also be noted that in Figure 2, because of display space constraints, the collections of nodes at level 205 (below level 204) are collectively represented as a triangle. In the currently preferred embodiment, the highest DOI is 0, the lower DOIs are negative numbers.

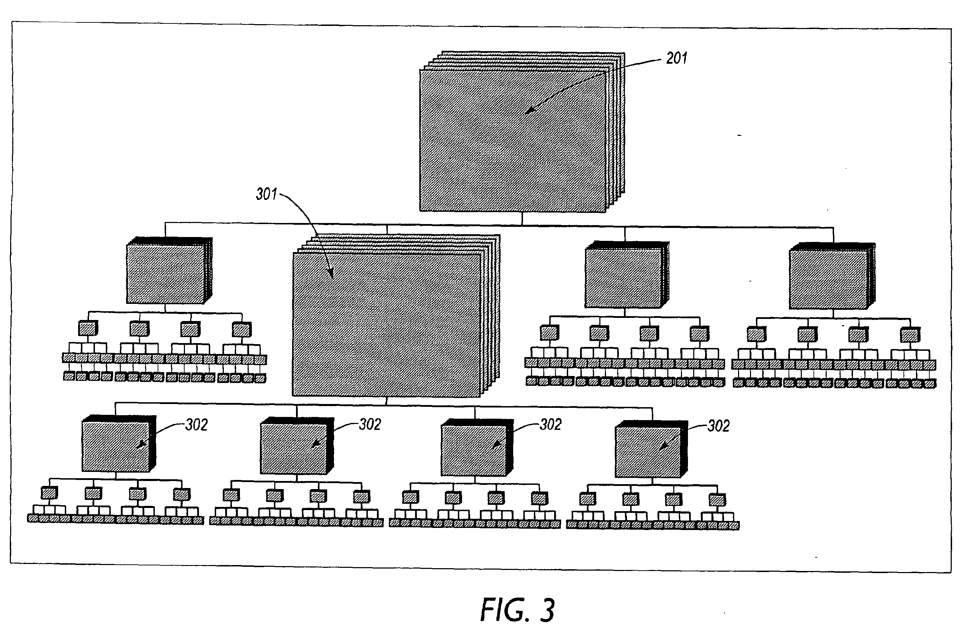

In Figure 3, a node 301 of the tree displayed in Figure 2 has been selected. The node 301 is on the next level down, and selection causes the changing of the DOI calculation for the nodes. When the tree is displayed, node 201 is reduced in size and child nodes 302 below the new focus node 301 in the tree are increased in size, according to the computed DOI's for the nodes. Although not illustrated, preferably the transition proceeds by a smooth animation from one state to another. It has been determined that such animation is desirable in order to keep the user oriented and unconfused about the transition and change in focus nodes.

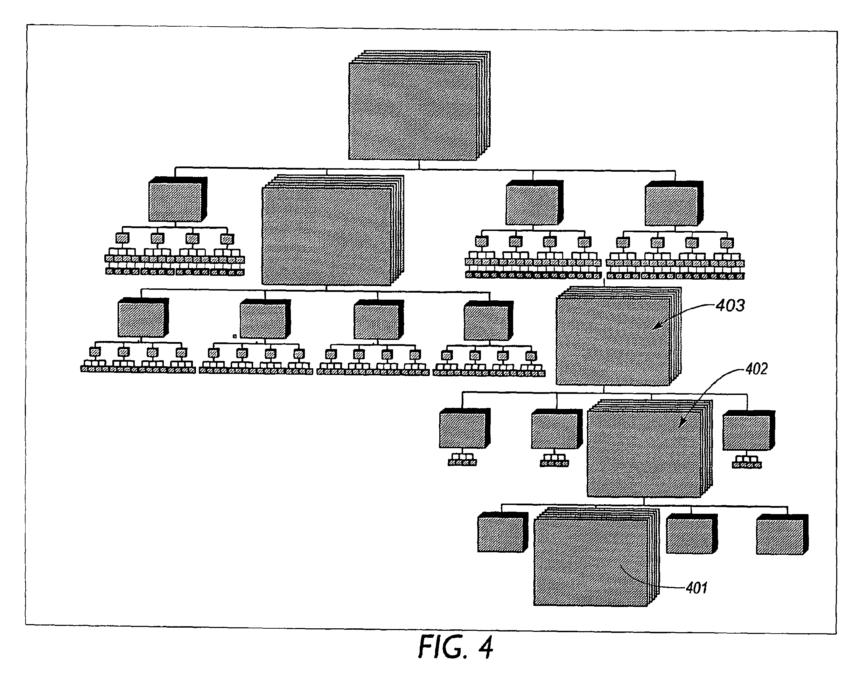

Referring to Figure 4, a user has selected one of the lowest nodes 401 either by selecting directly, or by selecting nearby nodes, causing the focus node 401 to get larger, and be more easily selectable. Note that other nodes have been re-sized based on their DOI value. For example, nodes 402 and 403 have increased in size, while nodes 301 and 201 have decreased in size. Again, this would be presented to a user via an animated transition.

The method for layout of nodes is as follows. There is a fixed original size for several incremental sizes of nodes. The tree is laid out at those sizes as if there were infinite space available. If the height of the tree is larger than the height of the window, a scale factor is calculated so that it will fit vertically. The method then determines actual node sizes multiplied by the scale factor and lays out screen positions based on those sizes. When there is not enough space horizontally for the nodes at a certain level, space is allocated for the focus node and for its parents and then to their siblings in order to the right and left of the focus node until a certain percentage of the horizontal space is left. Then the horizontal space for the rest of the nodes and the subtrees below them is compressed uniformly. That is the subtree below each sibling node will be compressed horizontally so that it fits below the sibling node.

It has been determined that it is desirable to always display some representation of the complete tree in the available display area. However, the display area for the tree on the display is generally a fixed resource. Accordingly, the tree needs to be constrained in ways to stay within its resource. The basic DOI-based display technique very greatly reduces the pressure on that resource. Even with the technique described so far, it is possible for all the nodes not to be effectively presented on the screen. There are two cases to consider, the tree not fitting in the horizontal direction and the tree not fitting in the vertical direction. The tree not fitting in the horizontal direction is common and occurs either because of a large branching factor below one node or because, since trees increase in width exponentially, there is an accumulation of widths.

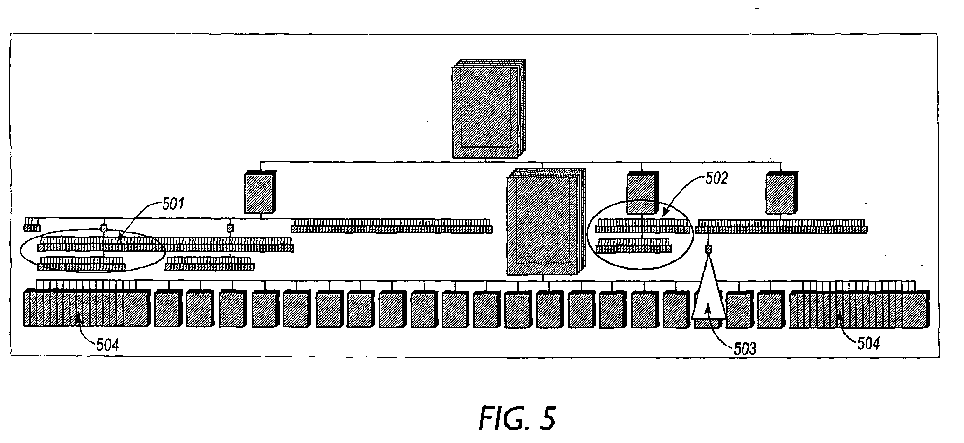

If the number of nodes across is large because of the accumulation of several branches, these are specially handled because the nodes below each box are laid out in the horizontal space available for each box. This pattern is visible in the tree illustrated in Figure 5. If the branching factor is large, then the nodes are folded as for node groups 501 and 502 illustrated in Figure 5. Folding refers to a technique wherein a node group is organized so that part of it is moved vertically below another part. If there are elided nodes below a threshold DOI value, then a triangular symbol, which will have a size proportionate to the log of the number of nodes, is used. Such a symbol is triangle 503 as shown in Figure 5.

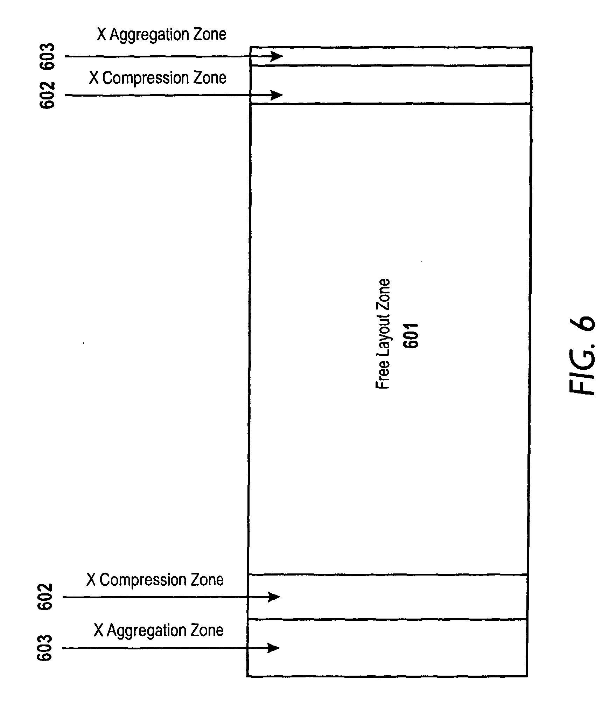

If the number of nodes across the display at any level is large, the available display resource into which the nodes are to be displayed is vertically divided into three regions as illustrated in Figure 6. Referring to Figure 6, a regular free layout zone 601, a compression zone 602, and an aggregation zone 603 are displayed. Typically 70% of the screen is in the free layout zone 601, with 20% in the combined compression zones 602, and 10% in combined aggregation zones 603. If necessary, the horizontal layout may be compressed for some of the nodes, for example by overlapping them. This is illustrated by level 504 of Figure 5. In the currently preferred embodiment, as a cursor control device is moved over these nodes they spring to the front, overlapping their neighbors, thereby allowing the user to peruse them. When the maximum compression is reached, an aggregate representation will be made for the remaining nodes, such that selecting in this region will select that node proportionate to that region. For example, if 100 nodes are in the aggregation region, selecting 30% of the way to the edge of the display would select the 30^{th} node from the inward edge of the region.

Table 2 contains pseudo code that describes the laying out of a visualization structure where nodes are compressed, in greater detail.

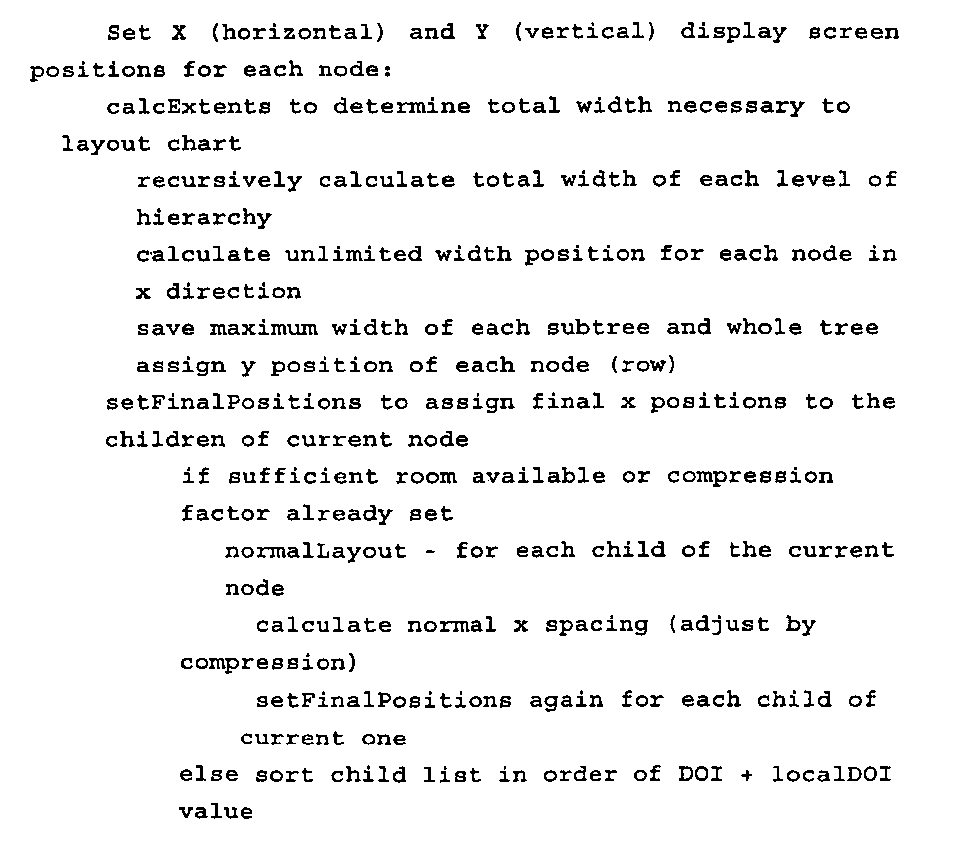

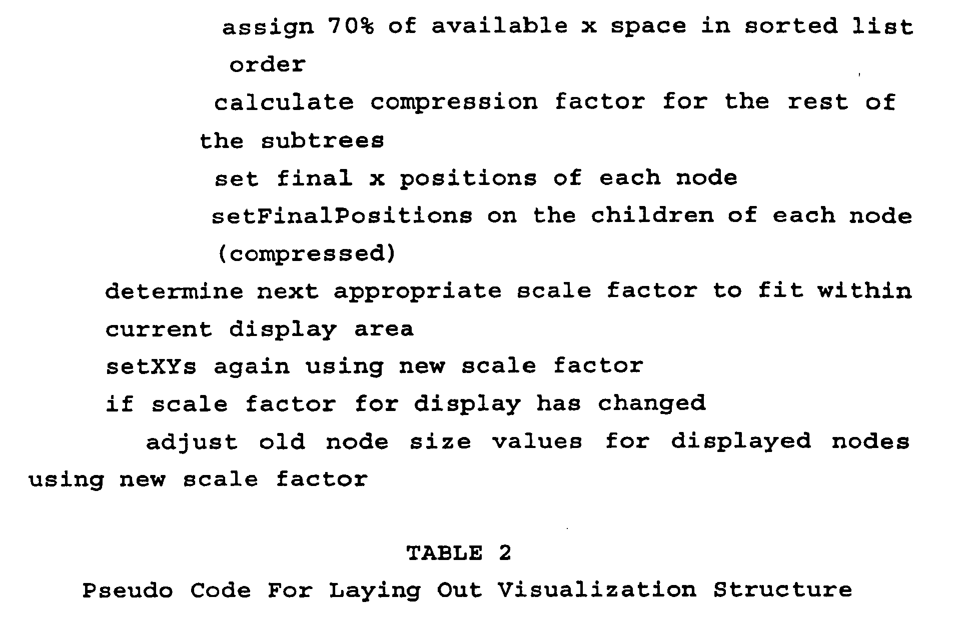

The nodes with the highest DOIs at a level have the largest node size, (for example see node 401 of Figure 4). This node size establishes the vertical height of a region in which to lay out the immediate descendents of all the nodes at that level. If there are too many descendents horizontally, the descendents are folded into multiple rows. Such folding into multiple rows is a common organization chart convention (with a vertical line joining the rows).

The localDOI value refers to the value at each level of the tree that determines priorities for horizontal space at that level only. This value could also be used for minor variations in the size of sibling nodes at one level. The use of DOI to do selective node expansion (as described below) and the use of folding rows greatly increases the size of a tree that can be horizontally laid out. Further, the use of compression and aggregation zones permits all trees to be fit within a fixed display space. It can also happen that a tree would be too deep vertically to fit within its space. In this case, nodes are either elided lower in the tree or in the middle, depending on the DOI. The term elide or elided is taken to mean that the nodes are not displayed and not that the node or its underlying data is deleted. First, a threshold DOI is established so if the nodes for a tree are less than the threshold DOI, then they are elided and replaced by an elision graphic. Since nodes decrease in elliptical importance with distance from the root and in distance importance with distance from the focus node(s), then a very deep tree would tend to show some nodes around the root and some nodes around the focus node, typically causing some of the intermediate nodes to be elided. However, the currently preferred embodiment provides for creation of the elision graphic above a node at a certain distance above the focus node. The elision graphic would represent nodes elided including the root node. The width of the symbol is proportional to the log of the number of nodes represented. The number of levels above the focus to display may be controlled by a variable specified by the user.

When the DOI is lower for the lower part of the tree, as happens for subtrees being fit within a node height or which would hit the bottom of the display area, the lower part of the tree is replaced by an appropriately proportioned elision graphic, e.g. a triangle whose width is proportional to the log of the tree width and whose height is proportional to the tree depth.

It can be that as in Figure 2, the use of the techniques described so far may leave unused space in the display area. Therefore, the present invention provides for a user to expand part of the tree into this unused space. Unused space commonly results from an upper limit on node size which causes the tree to take up less vertical space than is available in a typical window. It has been determined that enlarging to fit vertically would cause the nodes to become unusually large and appear to be distorted. Further, it would limit horizontal space, which it has been found to be more crowded.

Node expansion occurs when there is still vertical space available on the display. Expansion occurs on the "most interesting node". The number of levels below the focus node to expand automatically can be controlled by the user. A practical limit has been found to be three or four levels. The limit is necessary to prevent a very deep tree from scaling so that all of the nodes become too small. Node expansion at each level will occur on the "most interesting node".

Table 3 provides pseudo code describing such node expansion:

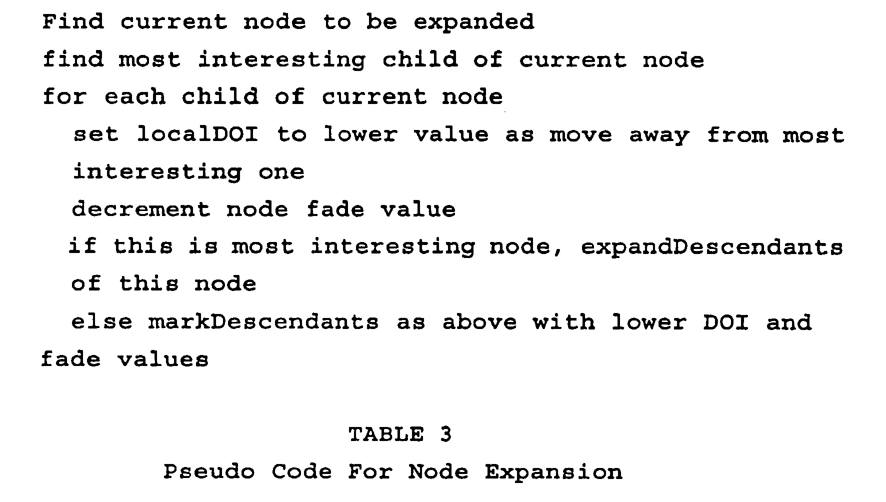

The tree is automatically expanded below the focus node by choosing the node in the level below with the most descendants. The next level below that node is expanded in the same way until the entire depth of the tree is shown or the user-specified number of levels is reached. This is done whenever the user chooses a new node to focus on which shows the expansion of the branch of the tree with the current node. The nodes selected at each level to expand form a "spine" of nodes that are represented in the large size about twice as large as their medium sized sibling nodes. This allows room for the display of the tree structure below the siblings using the smallest size nodes. Because the size of the nodes in the spine of this expansion are nearly the same, a "fade" value is used to make all of the nodes smaller at each level away from the current focus. This prevents the automatic scaling from making all of the nodes too small for very deep trees. The nodes close to the focus are thus always displayed in a relatively large size.

There are several ways for determining or otherwise identifying the "most interesting node" to expand. This can be an automated process or one based on user input. Some examples are: (1) This could be the node with the highest DOI on a level, or (2) it could be a node identified based on user supplied search terms.

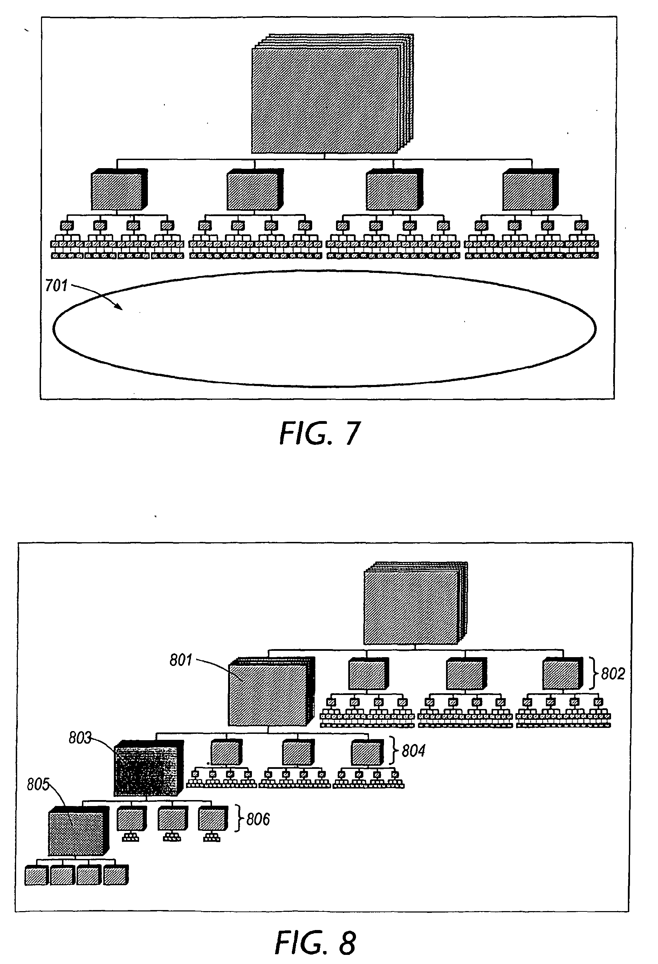

Figures 7 and 8 illustrate the tree of Figure 2 expanded according to the subtree with the most nodes. Referring to Figure 7, the tree does not take up the entire display area, as illustrated by the unused area 701. Referring to Figure 8, the node 801 and descendants comprise the subtree with the highest number of subnodes. At the level 802, the node 801 and its subtree has been expanded. This continues so at level 804, the node 803 and its subtree is expanded and at level 806 the node 805 and its subtree is expanded. As illustrated, the node expansion continues until the bottom nodes or "leaves" of the tree are reached.

Such node expansion has been found to be very useful in that it often provides insights into search levels beyond what would normally be provided (as many as 6 levels). This could dramatically decrease search times for particular information.

Each node typically has a number of data items to be displayed. For example, for an organization chart, the data items to be displayed could include fields such as Post, Post it reports to, Name, Title, Office extension, Email, Picture file link, Home page link, etc. The larger the number of data items to be displayed, a bigger display surface area for a node is needed. For the focus node, the majority of the information may be displayed.

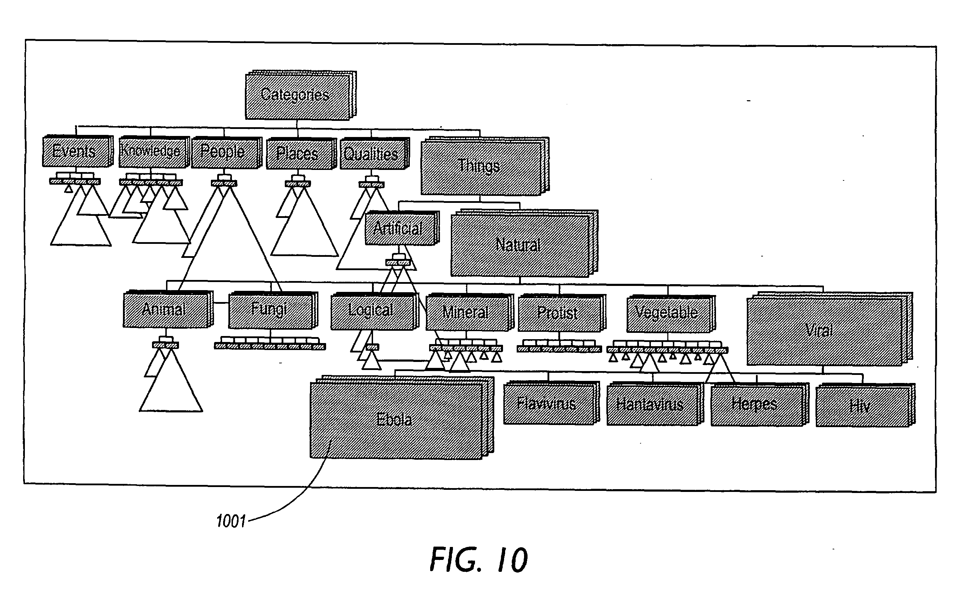

As discussed above, nodes will typically be of different sizes. As nodes get smaller, there is less room to display this information. Information displayed on the nodes is ranked by priority and as the nodes have less space the items with the higher priority are displayed. The present invention provides several techniques to allow the information to fit on a node:
1. Data deletion. Smaller nodes only display some of the data items.
2. Word abbreviation. Words and phrases are abbreviated if there is not room on the line where they are displayed. Different text abbreviation rules are applied according to the type of information (Names, phone numbers, email addresses). A substitution table is also read from a file to substitute abbreviations for common words when needed. For example, Vice President becomes V.P.
3. Node rotation. The normal view of nodes shows them as 3D boxes (illustrated in Figure 10). Using a gesture such as dragging the cursor left or right on a box makes the boxes appear to rotate such that another face of the boxes is now in the front. This allows more data items to be presented. Software based programming techniques for performing such node rotation to present different information is well known in the art.

It should also be noted that all or some of these techniques could be utilized. Alternatively, another window could be displayed alongside the structure to display all of the information.

User orientation in the tree is preserved by making the views of the tree animate into each other. The animation time is set at a desirable level, usually in the range of (0.7~1.0 sec). The average draw time per frame for recent frames is used to set the number of animation frames that can be drawn in this time. This is used to calculate the in-between positions of the boxes.

A tree transition is calculated based on a begin state and an end state of the tree. Generation of an end state is initiated, for example by a user selecting a new focus node.

The present invention has been applied in providing an interactive browser of node-link structures. The invention could be applied in a variety of contexts in which node-link structures are visualized. In particular, the invention could be applied in visualizing web-related structures such as the structure formed by a cached set of web pages or other web objects.

More generally, the invention could be applied to provide a browser for organization charts, file system hierarchies, hypertext hierarchies, world wide web connectivity structures, parts breakdowns, SGML structures, or any other large node-link structures. The browser could be used in editing structures or their contents.

Items in the tree can be linked to arbitrary Uniform Resource Locator (URL) pages or to programs, such as an email program. Hence, the tree can act as a browser to initiate display of web data. The tree as a browser operates more quickly than a conventional web browser, because a group of the pages can be viewed on the screen together and their relationship with other pages shown.

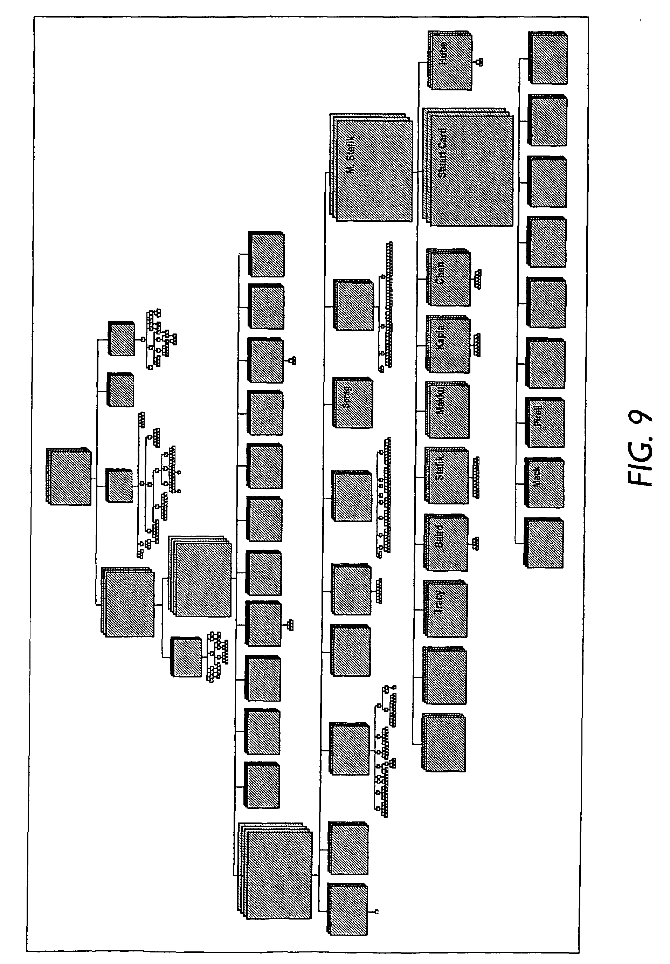

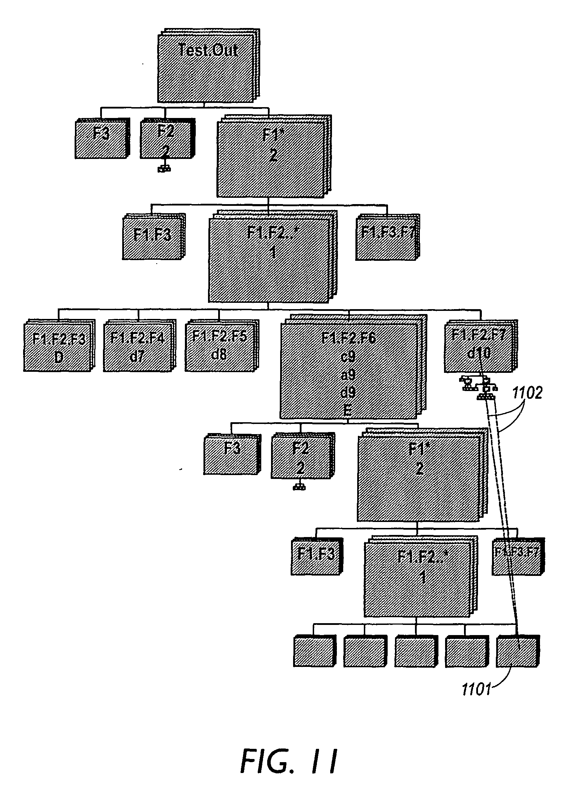

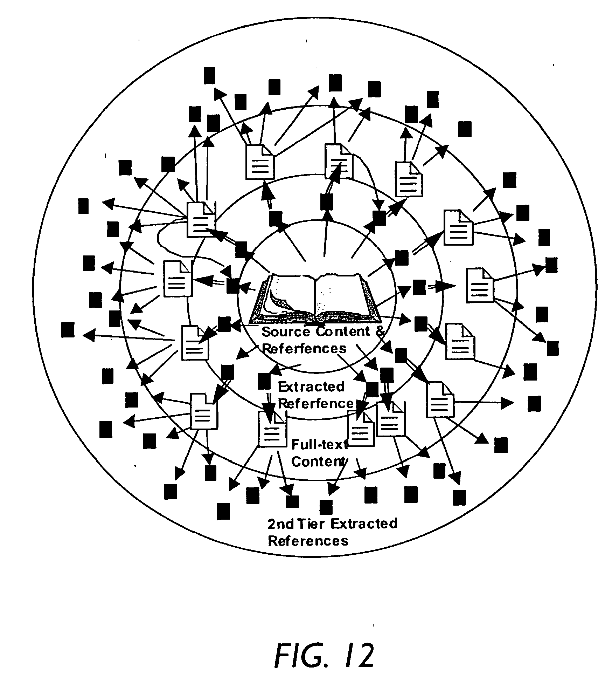

Described below are possible applications.
**(1) Organization Chart.** One use of this is for organization charts in which the nodes serve as links to supporting data as in Figure 9. This chart has over 400 nodes, is accessible over the Web, and combined all the information contained in 12 separate organization charts (each of which filled a page). By searching for a name or by browsing the chart, the details of the individual organizations is revealed. Furthermore, the chart serves as a gateway into the organizational home pages of the different organizations (accessed by clicking the appropriate link within the node). It also can be used to access email to any of the individuals whose email is given on the chart by simply clicking the link.
**(2) Web Sites.** Another use is for views of Web sites, which have been coerced or otherwise reduced into tree form. Thumbnail miniatures of pages can be displayed in the nodes. Full size displays of the pages can be displayed alongside the tree using a suitable web browsing application.
**(3) Web site statistics.** The DOI of individual pages in a web site can be set to a function of the number of hits that page has received in some predetermined interval of time such as the previous month or week or hour or other time period. Or some function representing a way of weighting period of access could be employed (for example, weighting hits as a declining exponential of days before present). Thus, site sponsors can watch the activity of their web sites. The weighting period could even be reduced to minutes so that sponsors could watch the immediate activity on their sites.
**(4) Databases.** Data bases that are expressible by trees can be displayed and searched. For example, the 7000 node taxonomic database used for competitive tests by ACM/SIGCHI is shown in Figure 10. In this competitive test, contestants present visualizations of the database which are then searched to find particular data items. By following the higher level groupings, the user has found the node 1001 entitled "Ebola Virus". An advantage of using the DOI Tree for searching is the entire tree is always visible which helps the user maintain the context of individual nodes. Also related relevant nodes are always given more space in the standard layout while the user is browsing the tree. The automatic expansion below the focus node can help understand the branch of the tree that contains the new focus.
**(5) Multilinked databases.** The nodes can be items in a database as in Figure 11. The items in the database are coerced or otherwise converted into a tree structure. However, the items in the database have multiple links to other items in the database. One set or class of links is used to create the tree structure. Typically, this class of links will be indicative of some relationship between those items. In this application, additional links to other items may be displayed when a predetermined user action is performed, e.g. a user moving a cursor over any item. This is illustrated by the links 1102 on item 1101.
   In another way of presenting a general graph with multiple links, multiple instances of a node may be presented in the structure. This may be based on a particular manner of creating the structure from the database. In this case, the displayed links may point to other instances of the node. Such duplicated nodes may be displayed so that they are visually distinct from other nodes (e.g. by different color, shape etc.).
   By using these techniques, complex structures that would be difficult to plot as generalized graphs are plotted as trees, but the other linkages can still be investigated. In the case where some of the nodes are aggregated together with a triangle under a node the line is drawn to the triangle.
**(6) Bibliographies.** A biblioplex is a set of documents generated by traversing successive generations of citations as in Figure 12. This can be displayed as a DOI tree. The DOI for individual nodes can be computed through spreading activation among the linkages or through cocitation analysis.
**(7) Email streams visualization.** Email streams can be represented as trees. The DOI for these streams could be generated based on the content similarity and tree closeness.

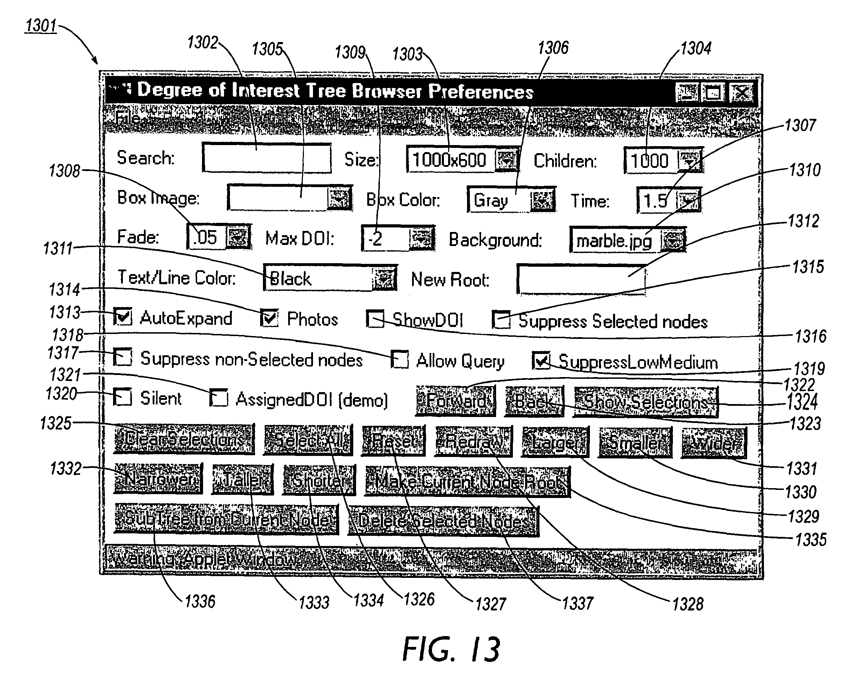

Figure 13 illustrates a control panel 1301 that may be presented to a user and used to provide visualization preferences, as well as to specify a search term (field 1302). In the currently preferred embodiment of the present invention, there can be more than one focus node. Typically, this would occur when some type of search is performed against the data in the items of the visualization structure.

Referring back to Figure 13, the various other controls include fields and checkboxes for specifying parameters for the visualization and command buttons for causing specific commands to be carried out. Field 1303 provides for specifying the size of the display area, field 1304 provides for specifying the number of child nodes to be displayed before folding, field 1305 specifies an image to be used for the "box" representing a node, field 1306 is used to specify the color of the box, field 1307 is used to specify a transition time for animation purposes, field 1308 is used to specify the "fade" value for determining the final DOI value used when rendering a node, field 1309 is used to specify a maximum DOI value before elision, field 1310 is used to specify a background image for the visualization, field 1311 is used to specify the color for lines and text, field 1312 is used to enable the specification of a new root node, checkbox 1313 is used to specify that node expansion should occur, checkbox 1314 is used to specify that photos can be displayed, checkbox 1316 is used to specify that the DOI value for the nodes should be displayed, checkbox 1315 is used to specify that selected nodes should be suppressed, checkbox 1317 is used to specify that non-selected nodes are to be suppressed, checkbox 1318 is used to Allow a Query, checkbox 1319 is used to specify suppression of Low Medium nodes, checkbox 1320 is used to turn sound on or off, checkbox 1321 is to enable the user assignment of DOI values.

Button 1322 is for traversing forward through the tree based on prior commands, Button 1323 is for traversing backward through the tree based on prior commands, button 1324 is for displaying all the nodes that had been previously selected, button 1325 is for clearing the memory of previously selected nodes, button 1326 is for causing selection of all the nodes, button 1327 is for resetting any memory of previously entered commands, button 1328 is for causing the tree to be redrawn, button 1329 is for causing the tree to be drawn with larger blocks, button 1330 is for causing the tree to be drawn with smaller boxes, button 1331 is for causing the tree to be drawn with wider boxes, button 1332 is for causing the tree to be drawn with narrower boxes, button 1333 is for causing the tree to be drawn with taller boxes, button 1334 is for causing the tree to be drawn with shorter boxes, button 1335 is for causing the current focus node to be the root node, button 1336 is for causing a visualization of a subtree based on the current focus node to be displayed, and button 1337 is for causing selected nodes to be deleted.

An alternative implementation would provide for certain frequently used control functions to be presented on a tool bar positioned within the window or display area. Use of toolbars is well known in the art of user interfaces for computer based systems.

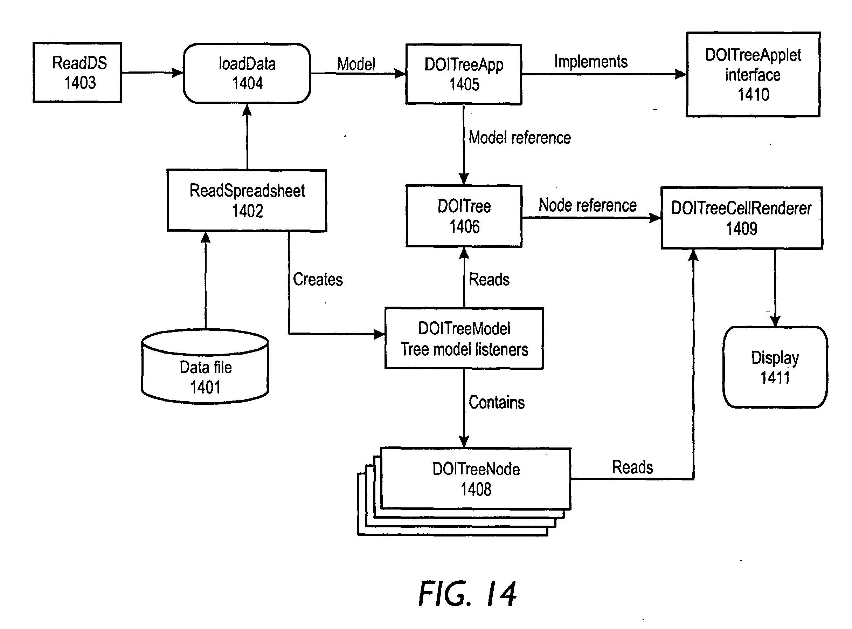

Figure 14 is a block diagram illustrating the functional components and data flow of the currently preferred embodiment of the present invention. Referring to Figure 14, the DOITreeApp 1405 is the main program. It can either be implemented as a Java program or can be an applet. An applet is a piece of software code that is typically intended for execution in a Web Browser. As mentioned above, the currently preferred embodiment of the present invention is implemented using the Java^{®} programming language for operation on a Java^{®} enabled web browser. Thus, the currently preferred embodiment is implemented as an applet. The DOITreeApplet interface 1410 defines an interface for other commonly used and publicly available applet functions that are used to implement the DOITree system such as playAudioClip, showDocument, getImage, etc.

DOITreeApp 1405 starts DOITree 1406 providing it with a DOITreeModel 1407. The DOITree Model 1407 defines the data to be used for creating the tree. The model contains a set of DOITreeNodes 1408 in a hierarchical structure. The data for each node is read from a data file 1401 using a utility such as loadData 1404 that uses ReadSpreadsheet 1402 ReadDS 1403 or other input routines depending on the format of the data. The manner in which the data file 1401 is created is described in greater detail below. ReadSpreadsheet 1402 uses an input format where the data for each node is on a line in a text file and fields of data are tab delimited. This is a format that can be produced by commercially available spreadsheet or database software.

Once DOITree 1406 is started, it receives input from the user via mouse or keyboard controls. DOITree 1406 determines the layout, size and position of nodes in the tree displays. DOITree 1406 calls DOITreeCellRenderer 1409 to draw each node on the display 1411 and also connecting lines, images and other text or graphics on the display 1411.

In the currently preferred embodiment, the software is organized in such a way that the main layout program element and renderer (DOITree 1406 and DOITreeCellRenderer 1409) can be imbedded into other software and treated as a viewer for tree data. Programming in the Java environment would be well known to one of skill in the art and thus no further discussion or description of the programming techniques used to implement the currently preferred embodiment is deemed necessary.

As noted above, the underlying data is stored in data file 1401. In the currently preferred embodiment, this data represents the basic structure used to display the visualization. Such data can be static or generated dynamically in whole or in part. The data for DOI Trees can be stored in and derived from a database or it can also be read from tab-delimited files. Users can thus prepare and edit trees for DOI Tree display by using a spreadsheet application, such as Microsoft Excel^{®}, and saving the entered data as a tab-delimited file. In a tab-delimited file, the tabs will indicate a separation of data items and node information.

It should also be noted that the tree may be built interactively, so that nodes may be dynamically added or removed from the tree structure. Also, such a tree structure may be built interactively by extracting information from a database responsive to user inquiries.

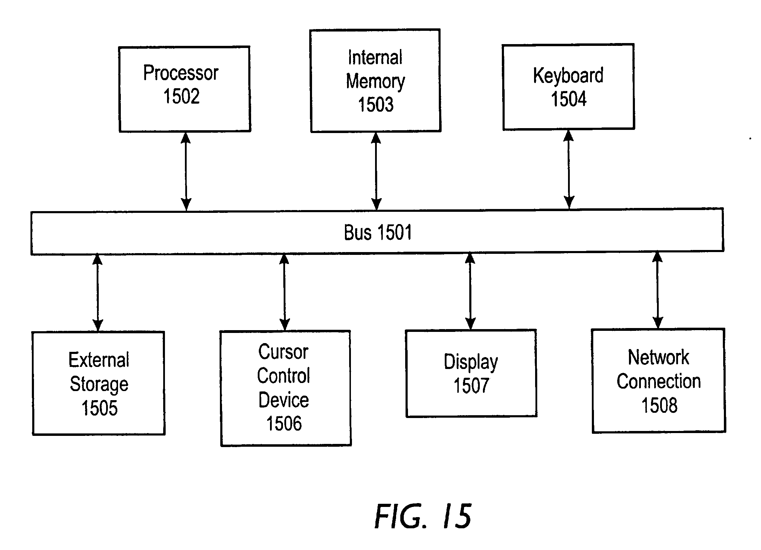

A computer based system on which the currently preferred embodiment of the present invention may be implemented is described with reference to Figure 15. The currently preferred embodiment of the present invention has been implemented on computer based systems using the Windows^{®} Operating System and the Internet Explorer^{®} Browser Application (both Trademarks of Microsoft Corporation of Redmond, Washington). As noted above, the present invention is implemented using software programming instructions written in the Java^{®} programming language for execution on a computer based system. Java is a trademark of Sun Microsystems of Mountain View, California. Thus, it is anticipated that the currently preferred embodiment of the present invention may operate on any computer based system supporting a Graphical User Interface and the Java Operating environment. In any event, referring to Figure 15, the computer based system is comprised of a plurality of components coupled via a bus 1501. The bus 1501 may consist of a plurality of parallel buses (e.g. address, data and status buses) as well as a hierarchy of buses (e.g. a processor bus, a local bus and an I/O bus). In any event, the computer system is further comprised of a processor 1502 for executing instructions provided via bus 1501 from Internal memory 1503 (note that the Internal memory 1503 is typically a combination of Random Access and Read Only Memories). Instructions for performing such operations are retrieved from Internal memory 1503. Such operations that would be performed by the processor 1502 would include the processing steps described in the flowchart of Figure 1 and the accompanying descriptions. The operations would typically be provided in the form of coded instructions in a suitable programming language using well-known programming techniques. The processor 1502 and Internal memory 1503 may be discrete components or a single integrated device such as an Application Specification Integrated Circuit (ASIC) chip.

Also coupled to the bus 1501 are a keyboard 1504 for entering alphanumeric input, external storage 1505 for storing data, a cursor control device 1006 for manipulating a cursor, a display 1507 for displaying visual output and a network connection 1508. The keyboard 1504 would typically be a standard QWERTY keyboard but may also be telephone like keypad. The external storage 1505 may be fixed or removable magnetic or optical disk drive. The cursor control device 1506, e.g. a mouse or trackball, will typically have a button or switch associated with it to which the performance of certain functions can be programmed. The display 1507 may comprise one or more physical display monitors. The network connection 1508 provides means for attaching to a network, e.g. a Local Area Network (LAN) card or modem card with appropriate software. Besides communication access, the network connection 1508 may be used to access various resources (i.e. servers) such as shared computing, storage or printing resources.

The invention has been described in relation to software implementations, but the invention might be implemented with specialized hardware built to operate in a systems architecture as described above.

## Claims

1. A method for displaying a representation of an entire collection of linked information using a visualization technique in a display area, said linked information comprised of a plurality of nodes (201,202,203,204,205) each having one or more links to other of said plurality of nodes, said method comprising the steps of:
a) identifying one or more focus nodes from said plurality of nodes (102);
b) generating a degree of interest (DOI) value for each of said plurality of nodes, said degree of interest value based on at least a distance between each node and said one or more focus nodes and corresponding to a node display size (103) and comprising the steps of
b1) assigning a highest DOI value to said one or more focus nodes (801), and their parent node(s) up to a root of the linked information;
b2) for siblings (802) of the nodes to which the highest DOI value has been assigned, assigning a DOI value less than the highest DOI value and based upon an order distance of the sibling node (802) from the focus node; and
b3) for all remaining nodes, assigning a DOI value less than that of their parent node;
c) laying out said plurality of nodes positioned based on associated links and sized based on associated degree of interest values in a tree structure (104);
d) identifying and performing any compression of the node display sizes necessary for displaying said linked information based on the layout of said plurality of nodes so that said representation is displayed completely in said display area (105); and,
e) displaying said linked information based on said layout of plurality of nodes and node compression in the display area (106), and wherein generating the DOI values further comprises, after step b2 and before step b3 identifying the most interesting child node (s) of the focus node up to a user-defined number of levels below the focus node and assigning to the siblings of the identified nodes, DOI values which are lower than those of the identified nodes and based on an order of the sibling node.

2. The method recited in claim 1, wherein in step b1 the highest DOI value is zero, in step b2, the sibling nodes are assigned DOI values of -1 plus an offset based on order away from the focus node, and in step b3, the rest of the nodes are assigned a DOI value of one less than their parent node.

3. The method recited in claim 1, wherein in step b1 the highest DOI value is -1, and in step b3, the rest of the nodes are assigned a DOI value of one less than their parent node.

4. The method as recited in any of claims 1 to 3 further comprising:
f) detecting that a user has selected one or more new focus nodes (107)
g) generating an updated DOI value for each of the plurality of nodes based on at least a distance between each node and said one or more new focus nodes and corresponding to a node display size (103);
h) laying out said plurality of nodes positioned based on associated links and sized based on the associated updated degree of interest values in a tree structure (104);
i) identifying and performing any compression of the node display sizes necessary for displaying said linked information based on the layout of said plurality of nodes so that said representation is displayed completely in said display area (105);
j) displaying said linked information based on said layout of plurality of nodes and node compression in the display area (106); and
k) animating on the display a transition from the lay out generated by steps (a) to (e) to the lay out generated by steps (f) to (j).

5. The method as recited in claim 1 wherein said step of laying out said plurality of nodes positioned based on associated links and sized based on associated degree of interest values in a tree structure further comprises
c1) setting the display size of each of the plurality of nodes in response to their DOI values, wherein there is a small number of possible node sizes and nodes with a higher DOI value are set to a larger node display size.

6. The method as recited in claim 1, wherein said step of laying out said plurality of nodes positioned based on associated links and sized based on associated degree of interest values in a tree structure is further comprised of the steps of
c2) determining if said structure will fit vertically into said display area;
c3) if said layout does not fit into said display area, reducing the spacing between nodes and/or the node display sizes proportionally until node-link structure fits in said display area.

7. The method as recited in any of the preceding claims wherein the display area has horizontal and vertical dimensions, and displaying the linked information comprises allocating space for the focus node, parents of the focus node and siblings of the focus node in order to the right and left of the focus node until a predetermined percentage of the horizontal space on the display area remains, and horizontally compressing the subtree below each sibling node to fit below the sibling node.

8. The method as recited in any of claims 1 to 6 wherein the display area has horizontal and vertical dimensions and is vertically divided into a regular free layout zone 501), at least one compression zone (602) and at least one aggregation zone (603), such that approximately 70% of the display area is allocated to the regular free layout zone, approximately 20% to the at least one compression zone and approximately 10% to the at least one aggregation zone.

9. The method as recited in any of claims 1 to 8, wherein said step of displaying said linked information is further comprised of the step of displaying a first set of data items associated with said nodes.

10. The method as recited in any of the preceding claims wherein the linked information comprises hierarchically linked information.

11. A system for browsing a collection of linked data item, said system comprising:
a display means (1507) having a display area for presenting views of a visualization of said collection of linked data items; and
an input device (1504, 1506) for providing input to change view of said visualization of said collection of linked data items; **characterised by**
a visualization processing element (1502) coupled to said display means and said input device, said element adapted to create a visualization of said collection of linked data items based on a Degree of Interest and a size of said display area, in accordance with the method of any of claims 1 to 10.

12. The system recited in claim 11 wherein the linked information comprises hierarchically linked information.

13. A computer program product storing instructions to enable a computer to perform a method according to any of claims 1 to 10.

## Patentansprüche

1. Verfahren zum Anzeigen einer Darstellung einer gesamten Sammlung von verknüpften Informationen unter Verwendung einer Visualisierungstechnik in einem Anzeigebereich, wobei jede der verknüpften Informationen, die eine Vielzahl von Knoten (210, 202, 203, 204, 205) umfassen, eine oder mehrere Verknüpfungen zu der Vielzahl von Knoten aufweist, wobei das Verfahren die folgenden Schritte umfasst:
a) Identifizieren von einem oder mehreren Fokus-Knoten (focus nodes) aus der Vielzahl von Knoten (102);
b) Generieren eines Interessegrad- (DOI) Werts für jeden der Vielzahl von Knoten, wobei der Interessegradwert auf wenigstens einem Abstand zwischen jedem Knoten und dem einen oder mehreren Fokus-Knoten basiert und einer Knoten-Anzeigegröße (103) entspricht und die folgenden Schritte umfasst:
b1) Zuordnen eines höchsten DOI-Werts zu dem einen oder mehreren Fokus-Knoten (801) und ihrem bzw. ihren Stammknoten bis zu einem Stamm der verknüpften Informationen;
b2) für Geschwister (802) der Knoten, zu denen der höchste DOI-Wert zugeordnet worden ist, Zuordnen eines DOI-Werts, der kleiner als der höchste DOI-Wert ist und auf einem Reihenfolgen-Abstand (order distance) des Geschwister-Knotens (802) und des Fokus-Knotens basiert; und
b3) für alle restlichen Knoten Zuordnen eines DOI-Werts, der kleiner als derjenige ihres Stammknotens ist;
c) Anordnen der Vielzahl von Knoten, die auf verbundenen Verknüpfungen basierend positioniert und auf verbundenen Interessegrad-Werten in einer Baumstruktur (104) basierend dimensioniert sind;
d) Identifizieren und Durchführen irgendeiner Komprimierung der Knoten-Anzeigegrößen, die zum Anzeigen der verknüpften Informationen auf Basis der Anordnung der Vielzahl von Knoten notwendig sind, so dass die Darstellung vollständig in dem Anzeigebereich (105) angezeigt wird; und
e) Anzeigen der verknüpften Informationen auf Basis der Anordnung der Vielzahl von Knoten und der Knoten-Komprimierung in dem Anzeigebereich (106), und wobei das Generieren der DOI-Werte des Weiteren nach Schritt b2 und vor Schritt b3 das Identifizieren des bzw. der interessantesten abgeleiteten Knoten des Fokus-Knotens bis zu einer benutzerdefinierten Anzahl von Ebenen unter dem Fokus-Knoten und das Zuordnen von DOI-Werten, die niedriger als diejenigen der identifizierten Knoten sind und auf einer Reihenfolge des Geschwister-Knotens basieren, zu den Geschwistern der identifizierten Knoten umfasst.

2. Verfahren nach Anspruch 1, wobei in Schritt b1 der höchste DOI-Wert Null ist, in Schritt b2 den Geschwister-Knoten DOI-Werte von -1 plus einem Versatz auf Basis der Entfernungsreihenfolge (order away from) von dem Fokus-Knoten zugeordnet werden, und in Schritt b3 dem Rest der Knoten ein kleinerer DOI-Wert als ihrem Stammknoten zugeordnet wird.

3. Verfahren nach Anspruch 1, wobei in Schritt b1 der höchste DOI-Wert -1 ist und in Schritt b3 dem Rest der Knoten ein kleinerer DOI-Wert als ihrem Stammknoten zugeordnet wird.

4. Verfahren nach irgendeinem der Ansprüche 1 bis 3, des Weiteren umfassend:
f) Erfassen, dass ein Benutzer einen oder mehrere neue Fokus-Knoten (107) ausgewählt hat;
g) Generieren eines aktualisierten DOI-Werts für jeden der Vielzahl von Knoten auf Basis wenigstens eines Abstands zwischen jedem Knoten und dem einen oder mehreren neuen Fokus-Knoten und entsprechend einer Knoten-Anzeigegröße (103);
h) Anordnen der Vielzahl von Knoten, die auf verbundenen Verknüpfungen basierend positioniert und auf den verbundenen aktualisierten Interessegrad-Werten in einer Baumstruktur (104) basierend dimensioniert sind;
i) Identifizieren und Durchführen irgendeiner Komprimierung der Knoten-Anzeigegrößen, die zum Anzeigen der verknüpften Informationen auf Basis der Anordnung der Vielzahl von Knoten notwendig sind, so dass die Darstellung vollständig in dem Anzeigebereich (105) angezeigt wird;
j) Anzeigen der verknüpften Informationen auf Basis der Anordnung der Vielzahl von Knoten und der Knoten-Komprimierung in dem Anzeigebereich (106); und
k) Animieren eines Übergangs von der in den Schritten (a) bis (e) generierten Anordnung zu der in den Schritten (f) bis (j) generierten Anordnung auf der Anzeige.

5. Verfahren nach Anspruch 1, wobei der Schritt des Anordnens der Vielzahl von Knoten, die auf verbundenen Verknüpfungen basierend positioniert und auf verbundenen Interessegrad-Werten in einer Baumstruktur basierend dimensioniert sind, des Weiteren umfasst
c1) Einstellen der Anzeigegröße von jedem der Vielzahl von Knoten in Reaktion auf ihre DOI-Werte, wobei eine kleine Anzahl von möglichen Knotengrößen vorhanden ist, und Knoten mit einem höheren DOI-Wert werden auf eine größere Knoten-Anzeigegröße eingestellt.

6. Verfahren nach Anspruch 1, wobei der Schritt des Anordnens der Vielzahl von Knoten, die auf verbundenen Verknüpfungen basierend positioniert und auf verbundenen Interessegrad-Werten in einer Baumstruktur basierend dimensioniert sind, des Weiteren die folgenden Schritte umfasst
c2) Bestimmen, ob die Struktur vertikal in den Anzeigebereich passt;
c3) wenn die Anordnung nicht in den Anzeigebereich passt, die Beabstandung zwischen Knoten und/oder die Knoten-Anzeigegrößen proportional reduzieren, bis die Knoten-Verknüpfungs-Struktur in den Anzeigebereich passt.

7. Verfahren nach irgendeinem der vorhergehenden Ansprüche, wobei der Anzeigebereich horizontale und vertikale Dimensionen aufweist, und das Anzeigen der verknüpften Informationen die Zuweisung von Platz für den Fokus-Knoten, Stammknoten des Fokus-Knotens und Geschwister des Fokus-Knotens in der Reihenfolge nach rechts und links von dem Fokus-Knoten, bis ein vorbestimmter Prozentsatz des horizontalen Raums auf dem Anzeigebereich verbleibt, und horizontales Komprimieren des untergeordneten Baums unter jedem Geschwister-Knoten umfasst, um unter den Geschwister-Knoten zu passen.

8. Verfahren nach irgendeinem der Ansprüche 1 bis 6, wobei der Anzeigebereich horizontale und vertikale Dimensionen aufweist und vertikal in eine reguläre freie Anordnungszone (601), wenigstens eine Komprimierungszone (602) und wenigstens eine Vereinigungszone (603) aufgeteilt ist, so dass ungefähr 70% des Anzeigebereichs der regulären freien Anordnungszone, ungefähr 20% der wenigstens einen Komprimierungszone und ungefähr 10% der wenigstens einen Vereinigungszone zugewiesen sind:

9. Verfahren nach irgendeinem der Ansprüche 1 bis 8, wobei der Schritt des Anzeigens der verknüpften Informationen des Weiteren aus dem Schritt des Anzeigens einer ersten Gruppe von Datenelementen besteht, die mit den Knoten verbunden sind.

10. Verfahren nach irgendeinem der vorhergehenden Ansprüche, wobei die verknüpften Informationen hierarchisch verknüpfte Informationen umfassen.

11. System zum Durchsuchen einer Sammlung von verknüpften Datenelementen, wobei das System umfasst:
eine Anzeigeeinrichtung (1507), die einen Anzeigebereich zum Darstellen von Ansichten einer Visualisierung der Sammlung von verknüpften Datenelementen aufweist; und
eine Eingabevorrichtung (1504, 1506) zum Bereitstellen einer Eingabe zum Ändern der Ansicht der Visualisierung der Sammlung von verknüpften Datenelementen; **gekennzeichnet durch**
ein Visualisierungsverarbeitungselement (1502), das mit der Anzeigeeinrichtung und der Eingabevorrichtung gekoppelt ist, wobei das Element so ausgelegt ist, dass es eine Visualisierung der Sammlung von verknüpften Datenelementen auf Basis eines Interessegrads und einer Größe des Anzeigebereichs in Übereinstimmung mit dem Verfahren von irgendeinem der Ansprüche 1 bis 10 erstellt.

12. System nach Anspruch 11, wobei die verknüpften Informationen hierarchisch verknüpfte Informationen umfassen.

13. Computerprogrammprodukt, das Anweisungen speichert, um einen Computer in die Lage zu versetzen, ein Verfahren gemäß irgendeinem der Ansprüche 1 bis 10 durchzuführen.

## Revendications

1. Procédé destiné à afficher une représentation d'une collection complète d'informations liées en utilisant une technique de visualisation dans une zone d'affichage, lesdites informations liées étant constituées d'une pluralité de noeuds (201, 202, 203, 204, 205) ayant chacun un ou plusieurs liens vers d'autres noeuds de ladite pluralité de noeuds, ledit procédé comprenant les étapes consistant à:
a) identifier un ou plusieurs noeuds de focalisation à partir de ladite pluralité de noeuds (102),
b) générer une valeur de degré d'intérêt (DOI) pour chaque noeud de ladite pluralité de noeuds, ladite valeur de degré d'intérêt étant fondée sur au moins une distance entre chaque noeud et lesdits un ou plusieurs noeuds de focalisation et correspondant à une taille d'affichage de noeud (103), et comprenant les étapes consistant à
b1) affecter la valeur DOI la plus haute auxdits un ou plusieurs noeuds de focalisation (801), et à leur noeud parent ou leurs noeuds parents jusqu'à une racine des informations liées,
b2) pour les noeuds frères (802) des noeuds auxquels la valeur DOI la plus haute a été affectée, affecter une valeur DOI inférieure à la valeur DOI la plus haute et fondée sur une distance d'ordre du noeud frère (802) par rapport au noeud de focalisation, et
b3) pour tous les noeuds restants, affecter une valeur DOI inférieure à celle de leur noeud parent,
c) disposer ladite pluralité de noeuds positionnés sur la base de liens associés et dimensionnés sur la base de valeurs de degré d'intérêt associées, dans une structure arborescente (104),
d) identifier et exécuter toute compression des tailles d'affichage de noeuds nécessaire pour afficher lesdites informations liées sur la base de la disposition de ladite pluralité de noeuds de sorte que ladite représentation soit affichée complètement dans ladite zone d'affichage (105), et,
e) afficher lesdites informations liées sur la base de ladite disposition de la pluralité de noeuds et de la compression de noeuds dans la zone d'affichage (106), et où la génération des valeurs DOI comprend en outre, après l'étape b2 et avant l'étape b3, l'identification du noeud enfant le plus intéressant, ou des noeuds enfants les plus intéressants, du noeud de focalisation jusqu'à un nombre défini par l'utilisateur de niveaux sous le noeud de focalisation, et l'affectation aux noeuds frères des noeuds identifiés, de valeurs DOI qui sont inférieures à celles des noeuds identifiés et fondées sur un ordre du noeud frère.

2. Procédé selon la revendication 1, dans lequel à l'étape b1 la valeur DOI la plus haute est zéro, à l'étape b2, les noeuds frères se voient affecter des valeurs DOI de -1 plus un décalage fondé sur un ordre de distance depuis le noeud de focalisation, et à l'étape b3, le reste des noeuds se voient affecter une valeur DOI inférieure de un à celle de leur noeud parent.

3. Procédé selon la revendication 1, dans lequel à l'étape b1 la valeur DOI la plus haute est -1, et à l'étape b3, le reste des noeuds se voient affecter une valeur DOI inférieure de un à celle de leur noeud parent.

4. Procédé selon l'une quelconque des revendications 1 à 3, comprenant en outre les étapes consistant à :
f) détecter qu'un utilisateur a sélectionné un ou plusieurs nouveaux noeuds de focalisation (107)
g) générer une valeur DOI mise à jour pour chaque noeud de la pluralité de noeuds sur la base d'au moins une distance entre chaque noeud et lesdits un ou plusieurs nouveaux noeuds de focalisation et correspondant à une taille d'affichage de noeud (103),
h) disposer ladite pluralité de noeuds positionnés sur la base de liens associés et dimensionnés sur la base des valeurs de degré d'intérêt mises à jour associées, dans une structure arborescente (104),
i) identifier et exécuter toute compression des tailles d'affichage de noeuds nécessaire pour afficher lesdites informations liées sur la base de la disposition de ladite pluralité de noeuds de sorte que ladite représentation soit affichée complètement dans ladite zone d'affichage (105),
j) afficher lesdites informations liées sur la base de ladite disposition de la pluralité de noeuds et de la compression de noeuds dans la zone d'affichage (106), et
k) animer sur le dispositif d'affichage une transition de la disposition générée par les étapes (a) à (e) à la disposition générée par les étapes (f) à (j).

5. Procédé selon la revendication 1, dans lequel ladite étape consistant à disposer ladite pluralité de noeuds positionnés sur la base de liens associés et dimensionnés sur la base de valeurs de degré d'intérêt associées, dans une structure arborescente, comprend en outre l'étape consistant à
c1) établir la taille d'affichage de chaque noeud de la pluralité de noeuds en réponse à leurs valeurs DOI, où il existe un petit nombre de tailles de noeuds possibles et les noeuds ayant une valeur DOI plus haute sont établis à une taille d'affichage de noeud plus grande.

6. Procédé selon la revendication 1, dans lequel ladite étape consistant à disposer ladite pluralité de noeuds positionnés sur la base de liens associés et dimensionnés sur la base de valeurs de degré d'intérêt associées, dans une structure arborescente, est en outre constitué des étapes consistant à
c2) déterminer si ladite structure rentrera verticalement dans ladite zone d'affichage,
c3) si ladite disposition ne rentre pas dans ladite zone d'affichage, réduire l'espacement entre les noeuds et/ou les tailles d'affichage de noeuds proportionnellement jusqu'à ce que la structure noeuds-liens rentre dans ladite zone d'affichage.

7. Procédé selon l'une quelconque des revendications précédentes, dans lequel la zone d'affichage présente des dimensions horizontale et verticale, et l'affichage des informations liées comprend l'allocation d'espace pour le noeud de focalisation, les parents du noeud de focalisation et les frères du noeud de focalisation dans l'ordre vers la droite et vers la gauche du noeud de focalisation jusqu'à ce qu'il reste un pourcentage prédéterminé de l'espace horizontal sur la zone d'affichage, et la compression horizontale du sous-arbre sous chaque noeud frère pour qu'il rentre sous le noeud frère.

8. Procédé selon l'une quelconque des revendications 1 à 6, dans lequel la zone d'affichage présente des dimensions horizontale et verticale et est divisée verticalement en une zone de disposition libre normale (601), au moins une zone de compression (602) et au moins une zone de regroupement (603), de sorte qu'approximativement 70% de la zone d'affichage est allouée à la zone de disposition libre normale, approximativement 20% à la au moins une zone de compression et approximativement 10% à la au moins une zone de regroupement.

9. Procédé selon l'une quelconque des revendications 1 à 8, dans lequel ladite étape d'affichage desdites informations liées est en outre constituée de l'étape consistant à afficher un premier ensemble d'éléments de données associés auxdits noeuds.

10. Procédé selon l'une quelconque des revendication précédentes, dans lequel les informations liées comprennent des informations liées hiérarchiquement.

11. Système destiné à explorer une collection d'éléments de données liés, ledit système comprenant :
un moyen d'affichage (1057) comportant une zone d'affichage destinée à présenter des vues d'une visualisation de ladite collection d'éléments de données liés, et
un dispositif d'entrée (1504, 1506) destiné à fournir une entrée pour changer la vue de ladite visualisation de ladite collection d'éléments de données liés, **caractérisé par**
un élément de traitement de visualisation (1502) relié audit moyen d'affichage et audit dispositif d'entrée, ledit élément étant conçu pour générer une visualisation de ladite collection d'éléments de données liés sur la base d'un degré d'intérêt et d'une taille de ladite zone d'affichage, conformément au procédé selon l'une quelconque des revendications 1 à 10.

12. Système selon la revendication 11, dans lequel les informations liées comprennent des informations liées hiérarchiquement.

13. Produit de programme informatique mémorisant des instructions pour permettre qu'un ordinateur exécute un procédé selon l'une quelconque des revendications 1 à 10.
